**Europäisches Patentamt**

**European Patent Office**

**Office européen des brevets**

(19)

(11) Veröffentlichungsnummer: **0 041 148**
**B1**

(12) # EUROPÄISCHE PATENTSCHRIFT

(45) Veröffentlichungstag der Patentschrift:
**12.09.84**

(51) Int. Cl.³: **H 01 R 39/00**

(21) Anmeldenummer: **81103552.6**

(22) Anmeldetag: **09.05.81**

(54) **Wälzlager mit elektrischer Energieübertragung.**

(30) Priorität: **31.05.80 DE 3020757**

(43) Veröffentlichungstag der Anmeldung:
**09.12.81 Patentblatt 81/49**

(45) Bekanntmachung des Hinweises auf die Patenterteilung:
**12.09.84 Patentblatt 84/37**

(84) Benannte Vertragsstaaten:
**BE CH FR GB IT LI NL**

(56) Entgegenhaltungen:
**DE - B - 1 228 689**
**GB - A - 2 009 533**
**US - A - 1 322 886**
**US - A - 3 719 916**
**US - A - 3 971 460**

**OFFICIAL GAZETTE OF THE US PATENT OFFICE, Jrg.
268, 25. November 1919, Seite 642, J.A. EDMAN: "Base
for electric fans"**

(73) Patentinhaber: **Wegmann & Co., August-Bode-Strasse 1,
D-3500 Kassel (DE)**
Patentinhaber: **INA Wälzlager Schaeffler KG,
Industriestrasse 1-3, D-8522 Herzogenaurach (DE)**

(72) Erfinder: **Wallwey, Erich, Beethovenstrasse 17,
D-3502 Vellmar (DE)**
Erfinder: **Becker, Wolfgang, Heideweg 46,
D-3502 Vellmar (DE)**
Erfinder: **Bender, Rolf, Ing.-grad, Glaubergstrasse 4,
6368 Bad Vilbel (DE)**
Erfinder: **Basener, Helmut, Freiwaldauer Strasse 23,
D-8552 Höchstadt/Aisch (DE)**

(74) Vertreter: **Feder, Heinz, Dr. et al,
Dominikanerstrasse 37 Postfach 11 04 26,
D-4000 Düsseldorf 11 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Wälzlager mit elektrischer Energieübertragung, welches zwei gegeneinander verdrehbare Lagerringe aufweist, zwischen denen Wälzkörper angeordnet sind und bei dem zur Übertragung von elektrischer Energie von einem der gegeneinander verdrehbaren Teile zum anderen in einen der Lagerringe ein oder mehrere elektrische Schleifringe eingelegt sind, die mit am anderen Lagerring angeordneten elektrischen Schleifkontakten zusammenwirken.

Es ist vielfach erforderlich, bei Maschinenteilen, die gegeneinander verdrehbar sind, dem verdrehbaren Teil elektrische Energie zuzuführen, wenn sich in diesem verdrehbaren Teil elektrische Vorrichtungen befinden, die mit Energie versorgt werden müssen. Vielfach erfolgt eine solche Energieübertragung durch Kabel, die durch das Lager geführt sind. In diesem Fall ist aber die Verdrehung der beiden Teile gegeneinander begrenzt, da das Kabel nicht verdrillt werden darf. Sollen die beiden Teile unbegrenzt gegeneinander verdrehbar sein, so werden zur Energieübertragung häufig Schleifringe verwendet, die an dem einen Lagerring innerhalb des Wälzlagers oder neben dem Wälzlager angeordnet sein können (siehe z.B. DE-B-12 28 689). Diese bekannte Anordnung von Schleifringen (siehe auch US-A-1 322 886 und GB-A-2 009 533) hat den Nachteil, dass sie verhältnismässig viel Raum beansprucht, und dass die Schleifringe einer Verschmutzung ausgesetzt sind.

Die der Erfindung zugrunde liegende Aufgabe bestand darin, ein Wälzlager der eingangs erwähnten Bauart so zu verbessern, dass die zur Übertragung der elektrischen Energie dienende Schleifanordnung in das Wälzlager selbst integriert wird und damit ein Wälzlager geschaffen wird, das wenig Raum beansprucht und bei dem die Schleifringe nicht verschmutzen können.

Die Lösung dieser Aufgabe erfolgt durch die kennzeichnenden Merkmale des Anspruchs 1. Bei dem erfindungsgemässen Wälzlager sind also mit anderen Worten die Schleifringe und die Schleifkontakte in dem Kreisringspalt zwischen den beiden Lagerringen angeordnet.

Bei dieser Anordnung der Schleifringe können die Abmessungen des Wälzlagers praktisch unverändert beibehalten oder die Bauhöhe des Lagers braucht nur geringfügig vergrössert zu werden, so dass die Schleifringanordnung keinen zusätzlichen Raum beansprucht. Weil die Schleifringe und die Schleifringkontakte zwischen der Lagerabdichtung und den Wälzkörpern und zwar zweckmässig oberhalb der Wälzkörper angeordnet sind, sind sie auch gegen Verschmutzung durch eindringenden Staub oder herabfliessende Schmiermittel geschützt, so dass ein stets guter Kontakt gewährleistet ist. Ferner sind die Schleifringe an der Innenseite des Lageraussenringes, d.h. also an der hohlzylinderförmigen Fläche des Lageraussenringes, angeordnet und besitzen nach innen gerichtete Schleifflächen, wobei sich die Schleifkontakte entsprechend an der zylindrischen Aussenseite des Lagerinnenringes befinden.

Gegenüber anderen Konstruktionen hat der Gegenstand der Erfindung noch den zusätzlichen Vorteil, dass die Schleifringe schon bei der Fertigung des Lagers exakt axial zum Lagerring angeordnet werden können und diese Lage auch nicht ändern, wenn das Wälzlager zerlegt und wieder zusammengesetzt wird.

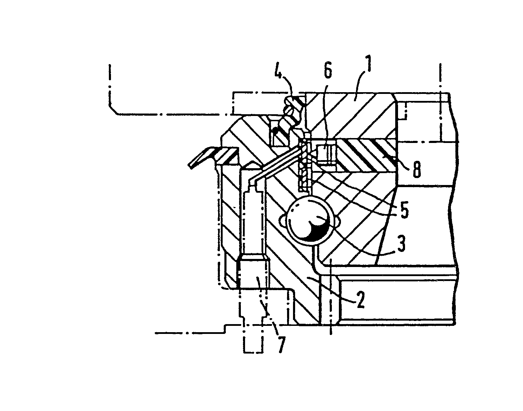

Im folgenden wird anhand der beigefügten Zeichnung ein Ausführungsbeispiel eines Wälzlagers nach der Erfindung näher erläutert.

In der Zeichnung ist ein Wälzlager in einem in axialer Richtung verlaufenden Teilschnitt dargestellt.

Das Wälzlager besteht aus dem Lagerinnenring 1, dem Lageraussenring 2 und den Wälzkörpern 3. An der Innenseite des Lageraussenringes sind oberhalb der Wälzkörper 3 Schleifringe 5 angeordnet, deren Schleifflächen nach innen gerichtet sind und sich somit in dem Kreisringspalt zwischen den beiden Lagerringen 1 und 2 befinden. Diese Schleifringe sind mit dem Lageraussenring exakt zentriert. Am Lagerinnenring 1 befinden sich Schleifkontakte 6. Zur Zu- und Abführung der elektrischen Energie sind die Schleifringe 5 mit Kabelanschlüssen oder Steckkontakten 7 und die Schleifringe 6 mit Kabelanschlüssen oder Steckkontakten 8 verbunden. Durch die Lagerabdichtung 4 sind nicht nur die Wälzkörper und die Wälzkörperbahnen, wie bei Wälzlagern üblich, sondern auch die Schleifringe und Schleifkontakte gegen Verschmutzung und Feuchtigkeit geschützt. Dadurch, dass sich die Schleifringe 5 und Schleifkontakte 6 oberhalb der Wälzkörper 3 befinden, ist auch vermieden, dass Schmiermittel aus den Wälzlagern auf die Schleifringe fliessen und diese verschmutzen könnte. Damit wird eine gleichmässige Abtastung der Schleifringflächen gewährleistet, und dadurch wird erreicht, dass sich der Verschleiss der Schleifringflächen verringert, was besonders bei hohen Schleifringgeschwindigkeiten wichtig ist. Zu der einfachen Fertigung und Montage und dem Schutz gegen Verschmutzung kommt somit auch noch eine erhöhte Funktionssicherheit und Verschleissfestigkeit hinzu.

**Patentanspruch**

1. Wälzlager mit elektrischer Energieübertragung, welches gegeneinander verdrehbare Lagerringe (1, 2) aufweist, zwischen denen Wälzkörper (3) angeordnet sind, und bei dem zur Übertragung von elektrischer Energie von einem der gegeneinander verdrehbaren Teile zum anderen in einen der Lagerringe (2) ein oder mehrere elektrische Schleifringe (5) eingelegt sind, die mit am anderen Lagerring (1) angeordneten elektrischen Schleifkontakten (6) zusammenwirken, dadurch gekennzeichnet, dass

a) Schleifringe (5) und Schleifkontakte (6) oberhalb der Wälzkörper (3) und unterhalb einer Lagerabdichtung (4) angeordnet sind, und

b) die Schleifringe (5) an der hohlzylindrischen Innenfläche des Lageraussenringes (2) angeordnet sind und hohlzylindrische, nach innen gerichtete Schleifflächen besitzen, während die zugehörigen Schleifkontakte (6) an der Aussenseite des Lagerinnenringes (1) angeordnet sind.

## Claim

Ball bearing with transfer of electric energy, comprising bearing rings (1, 2) which are rotatable relatively to one another, and which have bearing bodies (3) arranged in between, in which ball bearing, for the transfer of electric energy from one of the relatively rotatable parts to the other one, one or more electric collector rings (5) are received in one of the bearing rings (2), said collector rings cooperating with wiper contacts (6) attached to the other bearing ring (1), characterized in that

a) the collector rings (5) and wiper contacts (6) are arranged above the bearing bodies (3) and below a bearing gasket (4), and

b) the collector rings (5) are arranged on the hollow-cylindrical surface of the outer bearing ring (2) and comprise hollow-cylindrical, inwardly directed sliding faces, whereas the corresponding wiper contacts (6) are attached to the outer surface of the inner bearing ring (1).

## Revendication

Roulement avec transmission d'énergie électrique comportant deux bagues 1 et 2 tournant en sens inverse, entre lesquelles sont montés des éléments roulants 3 et dans lequel une ou plusieurs bagues collectrices 5 servant à la transmission d'énergie électrique de l'une des deux pièces tournant en sens inverse à l'autre, sont montées dans l'une 2 des bangues du roulement et coopèrent avec des balais électriques 6 disposés dans l'autre bague 1 du roulement, caractérisé en ce que:

a) les bagues collectrices 5 et les balais 6 sont diposés audessus des éléments roulants 3 et en dessous d'une garniture d'étanchéité 4 du roulement, et

b) les bagues collectrices 5 sont disposées sur la face intérieure en forme de cylindre creux de la bague extérieure 2 du roulement, et présentent des surfaces de frottement en forme de cylindre creux, dirigées vers l'intérieur, tandis que les balais 6 correspondants sont montés sur la face extérieure de la bague intérieure 1 du roulement.